Europäisches Patentamt

(19) European Patent Office

Office européen des brevets

(11) Publication number: **0 126 556**
A1

(12) # EUROPEAN PATENT APPLICATION

(21) Application number: **84302798.8**

(22) Date of filing: **25.04.84**

(51) Int. Cl.³: **H 05 B 41/29**

(30) Priority: **05.05.83 ZA 833189**
**29.11.83 ZA 838875**

(43) Date of publication of application: **28.11.84**
**Bulletin 84/48**

(84) Designated Contracting States: **AT BE CH DE FR GB IT LI LU NL SE**

(71) Applicant: **DUBANK ELECTRONICS (PTY) LIMITED,**
**43-11th Road, Kew, Johannesburg (ZA)**

(72) Inventor: **Dumon, Pieter Bernard Maurice, 224 Carinus Street, Meyers Park Pretoria (ZA)**

(74) Representative: **Beresford, Keith Denis Lewis et al,**
**R.G.C. Jenkins & Co. 12-15, Fetter Lane, London**
**EC4A 1PL (GB)**

(54) Method of starting and operating a gas discharge lamp, and power supply and electronic ballast therefor.

㊾ An electronic ballast for a gas discharge lamp including an inverter (18) the output frequency of which is controlled by a switching transformer (T2, T3) which is coupled to a transformer winding (T4) that senses current through a load (2Ø, L1) whereby the frequency varies to maintain a substantially constant current through the load. The circuit thus adapts itself to a number of lamps which may be of different types. A «slow-start» circuit (16) is provided which allows limited current via resistor (R1) during starting of the lamp, in the event of circuit failure and when a lamp is not present and has a by-pass circuit (24) activated via transformer windings (T1, T4) to switch on only in response to striking of the lamp.

METHOD OF STARTING AND OPERATING A GAS DISCHARGE LAMP, AND
POWER SUPPLY AND ELECTRONIC BALLAST THEREFOR

This invention relates to an electronic ballast and to an
electronic starter for a gas discharge tube, e.g. a
fluorescent tube.  More particularly, the invention is
concerned with improvements in or relating to an electronic
power supply circuit including an inverter,and possibly a
rectifier if powered by an AC supply, operating at high
frequency for driving a gas tube or lamp as well as an
electronic starter for use with such a circuit.

Electronic power supplies for driving a gas discharge lamp
or tube at a frequency sufficiently high for the lamp to
operate in a linear resistance mode are known e.g. PCT
applications WO 83/00587 and WO 81/03102 SIEMENS, which use
an integrated circuit chip to control the frequency, and US
3 328 721 Hehenkamp, 4042 852 Zadarej, 4 215 292 Inue et al,
4 277 726 Burke, 4 289 993 Harper et al, 4 306 171 Kaneda
and 4 392 085 Knoll  et al.  In these circuits the lamp is
provided in a series or parallel resonant circuit including
an inductance and a capacitance element with the inverter
driving the lamp circuit at a frequency different from the
resonant frequency to control the current and voltage of the
lamp.  It is also known to use circuits of the "chopper
type" to control the lamp current or voltage by varying the
width of each driving pulse to the lamp,e.g. US 4 042 856
Stiegerwald and Dutch patent 76 00156 Siemens.  These
circuits it is believed, suffer from one or more
disadvantages, such as, they have a low power factor, and or
they provide undesirable harmonic feedback into the supply
line, or provide radio interference noise, or they are
expensive.

Circuits of the type mentioned above also have starting
circuits.  One type, e.g. WO 83/00587 and EPC 0 056 642 uses
a timer to allow a heating current to be applied to the lamp
elements for a fixed period before starting the inverter and
supplying full voltage and current to the lamp.   Another type uses a current limiting device, usually a resistor, in parallel with a by-pass circuit to allow full voltage and current to be applied to the lamp via the inverter. The by-pass circuit may be controlled by a thermistor (temperature dependant resistor) e.g. US 3 328 721 and US 4 306 177 or it may be time interval controlled with the voltage increasing steadily, e.g. US 4 277 726, or it may provide a boosted, striking or starting voltage after a predetermined time interval, e.g. US 4 042 852. Some problems with these devices are that a high voltage may be suddenly applied to the invention which can damage the components, the high starting voltage is applied to the lamp terminals regardless of whether a lamp is present or not, and the running voltage is still present at the lamp terminals when the lamp is removed.

One object of this invention is to provide an electronic power supply including an inverter which is capable of providing a high power factor, ensures a satisfactory tube life and is suitable for minimising harmonic feedback to an AC supply.

Another object of the invention is to provide a starting circuit for a gas discharge lamp which satisfactorily minimises the disadvantages mentioned above.

According to one aspect of the invention there is provided a method of operating a gas discharge lamp including the steps of supplying a high frequency alternating current to the lamp in series with an inductance means from an inverter, the lamp and inductance means forming a load; sensing the current through the load; and varying the supply frequency in accordance with the sensed current to maintain a substantially constant current through the load.

In order to dim the light output of the lamp, the method of

3

the invention further provides for decreasing the voltage of the supply to the inverter which in turn decreases the voltage applied to the load, the current through the load being maintained substantially constant by increasing the frequency of the supply in accordance with the increased impedance of the load. With this method the lamp light output decreases because the energy through the lamp (voltage x current) decreases, while the current through the lamp remains substantially constant.

The constant current through the lamp has the benefits of ensuring a normal life expectancy for the lamp and facilitating control of harmonic feedback to an AC mains supply using a suitable filter. This applies even when the lamp is dimmed.

According to another aspect of the invention there is provided a power supply for a gas discharge lamp comprising an inverter for driving the lamp at a frequency sufficiently high for it to operate in a linear resistance mode wherein the inverter is of a variable frequency type comprising two switch means for switching a drive output between voltages of opposite polarity and having a switching transformer controlling the switch means, and impedance means connectable in series with a lamp to form a load, the switching transformer being connectable to the load to provide positive current feedback to the inverter to control its frequency to maintain a substantially constant current through the load.

The switching transformer is preferably in series with the load, however it may also be in parallel with the load. Preferably the frequency of the inverter is between 20 and 100 kHz, more preferably between 30 and 70 kHz, and most preferably between 30 and 48 kHz, during normal operation, though the frequency will be in the higher

4

ranges when the light output is dimmed.

There may be a plurality of loads in parallel with each other, each load comprising a lamp in series with an inductance means.

Preferably the inverter is of the push-pull type. Preferably the switch means are FET's i.e. field effect transistors, though any suitable switching transistors may also be used. Preferable voltage limiting means is connected across the drain and source of each FET (collector and emitter in the event of transistors). Preferably a current limiting means is provided to control the voltage applied to the gate (base) of each switch means by sensing the current passing through the switch. The voltage and current limiting means are to protect the FET's (transistors) in the event of input power supply surges, e.g. resulting from lightning strikes or if a tube is removed or fails while the inverter is operating or during start-up.

Preferably, such as for use with an AC supply, e.g. mains supply, a filter is provided on the input power supply to the inverter upstream of the rectifier. Preferably in addition to the filter a radio interference suppression capacitor, suitably of 0,01 to 0,1 μF, is provided in parallel with the inverter.

A capacitor to provide a striking or starting potential across the lamp is provided in parallel with the inverter, current limiting means being provided to control the supply of current to this capacitor so that a starting potential is achieved only after a predetermined time interval sufficient to allow the lamp elements to be heated. Preferably by-pass means is provided to by-pass the current limiting means for normal operation of a lamp. Preferably the by-pass means is activated in response to striking of the lamp.

5

According to another aspect of the invention a method of starting a gas discharge lamp includes the steps of restricting the current supply to the lamp during starting thereof and subsequently increasing the current supply to the lamp, including the further steps of sensing the current through the lamp and increasing the current supply only when the sensed lamp current increases on starting the lamp.

This method ensures that the current applied to the inverter and lamp is limited during starting so as to prevent "shocks" to the lamp and inverter components during starting, which shocks are known to shorten the life of these components. In addition the terminals for the lamp, when a lamp is not present, are protected or made safe because a limited current only is present which would not be harmful if accidentally touched. Full current is present at the terminals only when a lamp is in place and starts or strikes.

Preferably this method includes the further steps of connecting the elements of the lamp in series with each other and a capacitor, supplying an alternating voltage to the lamp from an inverter, increasing the frequency of the alternating voltage to allow an increasing current to flow through the elements to heat them; and after a predetermined time delay applying a potential across the lamp to cause it to start. This method ensures beneficial slow heating of the lamp filaments and beneficial run-up of the inverter to operating frequency.

Yet another aspect of the invention provides a ballast for a gas discharge lamp including current limiting means for limiting the current delivered to the discharge lamp during starting thereof, and means responsive to striking of the lamp for by-passing the current limiting means to allow

5

6

adequate current to the lamp during normal running thereof.

Further aspects of the invention as well as optional and preferred features are set out in the appended claims, which are to be regarded as a part of the present disclosure, and will become evident from the following description made with reference to the accompanying drawings of preferred embodiments of the invention.

In the drawings :

Figure 1 shows an embodiment of an electronic ballast or power supply of the invention for a low pressure gas discharge lamp, such as a fluorescent tube:

Figure 2 shows an input filter for the invention;

Figure 3 shows how up to four lamps are connected for operation from a single ballast; and

Figure 4 shows an alternate arrangement for coupling the lamp to an electronic ballast.

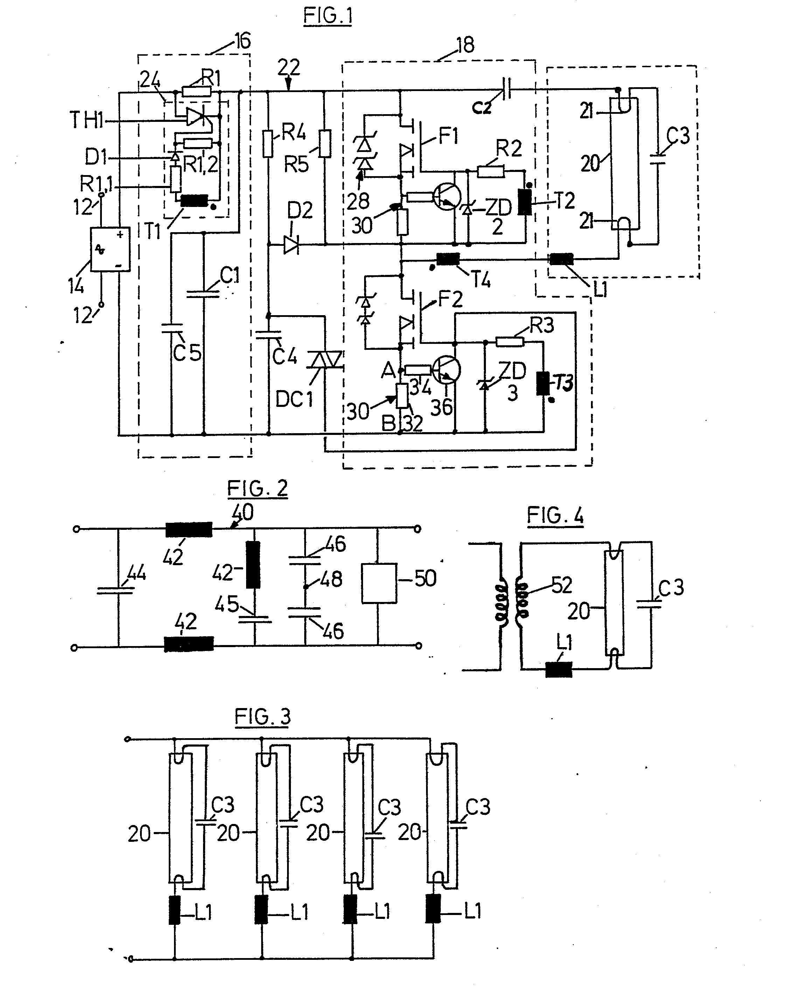

Referring to Figure 1 of the drawings there is shown an electronic ballast circuit 10 for fluorescent tubes, i.e. low pressure gas discharge tubes, comprising an alternating current mains input 12, a conventional full wave bridge rectifying circuit 14, a slow-start circuit 16, an oscillator circuit or inverter 18, a fluorescent tube 20 and a start circuit 22 for the oscillator 18 generally between the circuits 16 and 18.

The slow start circuit 16 comprises a current limiting resistor R1. (270 K, 1/2 W) and a capacitor C1 (47 $\mu$F, 380-450V), which with R1 provides a RC time constant of about 1 second.

7

In parallel with the resistor R1 there is a by-pass circuit 24 comprising a thyristor TH1 which bridges the resistor R1 and which has its gate connected in series with a transformer coil T1, a resistor R1,1 (1K), and a diode D1. A resistor R1,2 (10k) bridges the base and emitter of thyristor TH2.

The oscillator circuit 18 is of the "push-pull" type comprising two transformer coupled switching circuits 26. The upper circuit 26 shown in the drawing comprises a field effect transistor (FET) F1, (e.g. types 1RF 830 or BU 241A) a resistor R2 (100E), a transformer coil T2 and a zener diode ZD1. The lower circuit 26 shown in the drawing has the same components, but with the reference number 2. The oscillator 18 also includes, as normally required for switching, a capacitor C2 (0,1 μF) in the upper, positive line of the circuit in series with the lamp 20.

Each of the FET's F1 and F2 is over-current and over-voltage protected as follows.

First a zener diode pair in series 28 (of 150V and 200V, 5W) is connected, respectively, across each FET between source and drain. Each zener diode pair 28 acts as a voltage clamping device to limit the peak voltage applied to each FET to prevent overloading such as when a tube is removed or against the effects of lightning. In practice, the FET may be designed to accommodate a peak voltage of 500 volts, while the zener diode pair is selected to conduct at 350 volts. In this way when the breakdown voltage of the zener diode is exceeded it becomes conducting and the current can flow through it thereby to protect the FET.

Second each switching circuit 26 has a current control ciruit 30 controlling the gate of the FET. Each control

7

8

circuit 30 comprises a resistor 32 (2 x2 E7) in the negative or earthline to the source of the FET. The high voltage side of the resistor is connected via a current limiting resistor 34 (2K2) to the base of a transistor 36 (type BC 184), the collector of which is connected to the gate of the FET. The value of the resistor 32 is selected using Ohm's Law V = IR, such that when the current through resistor 32 exceeds a predetermined value, say 500 mA, a trigger voltage of 0,6V is present at point A. Thus transistor 36 is switched on, the voltage at the gate drops, consequently the current through the FET drops and the current through the resistor 32 falls. When the current through resistor 32 drops there is consequently a decreased potential across resistor 32 and transistor 36 switches off. In this way the current through each FET is controlled such that it is below the maximum current which the FET can handle when there is a peak voltage across the fluorescent tube. Hence an overcurrent through the FET which can damage the FET is prevented; this situation might arise at switch-on or if there is a short circuit.

The tube 20 has conventional heating elements or filaments 21 which are in series with each other and a capacitor C3 (33 nF, 2000V). The heating elements are also in series with a choke L1,(type EC30,135T) and a transformer coil T4 which is in series with the inverter output.

The starter circuit 22 for the oscillator 18 comprises a resistor R4 (330 K) in series with a capacitor C4 (0,1μF) which together form a time delay circuit of shorter duration than R1,C1. A diac DC1 (BR 100/3. DO 14) is connected between the time delay circuit R4.C4 and the gate of FET F2. A diode D2 is also connected from the time delay circuit R4, C4 to the transformer coil T4 and the FET F1 and F2. The starter circuit also includes a resistor R5 which is a high value resistor, say 330 k.ohms, and provides a minimal

8

9

starting current for FET, F1.  A capacitor, not shown, may
be provided to speed up starting of this FET by discharging
and conducting starting current when FET F1 fires.

The transformer coils T1, T2, T3 and T4 are coupled to one
another and are arranged in what is known in the art as a
"pot-core transformer".  In this embodiment the transformer
is a 26mm (Phillips) - FX 2240.

In practice the circuit described above operates as follows.

At switch on, an alternating current is applied from the
mains 12 to the bridge rectifier 14 from which is obtained
an unsmoothed direct current.  At this stage the thyristor
TH1 is off and current flows slowly through resistor R1 to
charge capacitor C1.  At the same time current flows
through resistor R4 and capacitor C4 as well as through R5
to FET F1.  When the capacitor C4 reaches a predetermined
potential, say 20 volts, the diac DC1 breaks down and an
input pulse is applied to FET F2.  The oscillator 18 thus
initiates oscillation as will be more fully described later.
The oscillating current in the oscillator 18 allows current
to flow along the upper, positive line through the capacitor
C2, through the filaments 21 and capacitor C3, and then
through the choke L1 and coil T4.  As current flows
capacitor C2 charges until there is no further current flow.
At this stage the coil T4 becomes saturated causing F2
to switch off and F1 to switch on.  When this occurs
capacitor C2 is shorted out and dumps its stored energy
through the tube 20.

When C2 has discharged, F1 switches off and F2 is switched
on.  The oscillator thus oscillates.  The frequency of the
oscillator is dependant on the period required to saturate
the coil T4 and accordingly is dependent  on the current
flow through the filaments 21 and capacitor C3.

10

As the capacitor Cl charges and the voltage across it increases the frequency of the oscillator 18 also increases. As this frequency increases the current flow through the capacitor C3 increases and the current flow through the filaments increases.   This in turn causes a further increase in frequency of the oscillator 18 because T4 saturates more rapidly.   This increased current heats the filaments 21 further until such stage as the capacitor Cl reaches the breakdown voltage of the tube, normally in the region of 100 to 108 volts.   When the tube fires, i.e. a discharge arc forms between the filaments 21, the internal resistance of the lamp falls rapidly to a low negative resistance and there is a relatively large current flow through the choke Ll and coil T4.   Since the coil T4 is coupled to the coil Tl of the by-pass circuit 24, there is a current pulse to the gate of the thyristor TH1 when the current in T4 reaches a predetermined value, e.g. saturation. This pulse switches on the thyristor TH1 so that the current limiting resistor R1 is by-passed.   Sufficient current now passes through the tube 20 to sustain the discharge.   During oscillation of the oscillator 18, energy transferred to the coil Tl is sufficient to energise the gate of TH1 and keep it on even though its supply is a DC varying from 0 to peak voltage.

During normal operation the oscillator 18 oscillates at a relatively high frequency, optimally about 30 to 45 kHz, but the frequency of which is dependent on the current flow through or the impedance of the tube.   This lamp current flow varies as the tube heats up to its operating temperature normally in the region of 40°C. Immediately after firing the operation of the oscillator 18 is as follows.  · As the current increases the frequency increases but at the same time the impedance of the choke Ll in series with tube 20 and forming the "load" also increases as a result of the frequency increase. This impedance increase with frequency in turn causes a decrease in current in the choke and therefore a reflexive decrease in frequency of the oscillator 18 since T4 takes longer to saturate. This change in frequency of the oscillator 18 normally continues for about 2 to 3 minutes until the operating temperature has been reached and the current flow through the tube stabilises. If the impedance or the tube 20 changes during normal operation the frequency will also change so that the current through the lamp 20 and choke L1, i.e. load, remains substantially constant. If the lamp is dimmed by reducing the input voltage at 12, the frequency increases to maintain the current through the lamp although the voltage across it is less.

The frequency of about 30 to 45 kHz is selected because this is optimum for the FET's and because it ensures that when the frequency of the oscillator drops it does not drop below 15 to 20kHz which is the frequency below which the plasma in the tube no longer has a substantially linear resistance. The minimum resistance of the tube will depend on the tube, the density of gas in the tube, the composition of the gas, the number of tubes being operated and other factors as is well known in the art.

A feature of the ballast 10 is that the oscillation frequency is load dependent, the load being the lamp 20 in series with the choke L1, the frequency varying in such a manner that the current through the load is substantially constant, even when the lamp is dimmed.

As mentioned previously, the time constant of R4, C4 is considerably less than that of R1,C1 so that after the diac has broken down and the oscillator started the diac no

12

longer functions.    In other words as the FET F2 fires
because of the voltage through the diac DC1, F2 is connected
to ground and C4 to zero or a low voltage, such as 0,6
volts.  This voltage is too low to cause the diac DC1 to
breakdown again.    The frequency of the oscillator is much
shorter than the time constant of R4, C4 so that C4 always
remains at a low potential.   The diode D2 allows C4 only
to be pulled, i.e. discharged, to ground.

The capacitor C1 forms a frequency break for the circuit,
i.e. it serves to isolate the high frequency oscillator and
tube from the rectifier 14 and mains supply 12.   A further
radio interference capacitor C5 (0,01μF to 0,1 μF, e.g.
Phillips − MKT−P) is provided in parallel with C1 to minimise
or isolate radio noise.

Figure 2 shows a noise filter 40 provided at the input 12 to
the rectifier 14.    The filter 40 comprises three
inductances 42 (each 0,5H) and two capacitors 44 (1,5 μF)
and 45 (2μF) arranged as shown.

An optional feature is a pair of capacitors 46 in series
between the input lines, with a central tap 48 that may be
connected to ground for earthing high frequency
oscillations.  Also shown adjacent the filter is a metal
oxide thyristor 50 for transient voltage protection, known
in the art as an M.O.V (e.g. V 275 LA 10A).

Figure 3 shows how a plurality of tubes 20, up to four if
required, are connected to the ballast 10 of Figure 1.   The
tubes 20 are in parallel with one another and each tube 20
has its own capacitor C3 and choke L1.

Figure 4 shows an example of a "parallel" connection for
tube 20 (or plurality of tubes 20 according to Figure 3).
Instead of being directly connected in series to the output

13

of the ballast, the tubes are connected through a transformer 52 which operates in a non-saturated mode. Effectively each tube 20 is still "in series" with the ballast output. This arrangement is suitable for use in those regions where the mains supply is of the order of the striking potential of the tube,e.g. 110V, 60Hz, and the transformer 52 is used to step-up the potential particularly for firing the tube.

The component values given in the description above are illustrative values for a 220 to 250V, 50Hz supply and are not to be regarded as limiting. On test with two type A4 lamps of 40 watt this circuit has provided the following results:

Relative light output :  115% and 95%

Power factor : Supply voltage 230V;   input current 0,461A;
               input power 98,44W ;   power factor 0,93

Harmonics in AC supply (frequencies in Hz)
    even frequencies, i.e. 100, 200, 300, 400, 500 each less
    than 1%

    odd frequencies, 150 = 6%,    250 = 5,2%, 350 = 2,8%
                     450 = 0,7%, 550 = 1,2%

The embodiment described above has the following advantages.

First it is a "soft-start" circuit in that the filaments 21 heat up slowly and the potential applied to the electronic components is initially low and then increase relatively gradually. Nominally the starter time is of the order of 1 second.Second, the high frequency circuit is automatically balanced and is stabilised in accordance with a substantially constant current through the tube;   this

13

(4

substantially constant current greatly facilitates harmonic feedback to the main supply.

Third the oscillator 18 automatically stops when the tube is removed and the soft-start circuit is switched out. At this stage the circuit is protected by a 270 kilo-ohm resistor whereby all lines are "safe" and may even be accidently touched by hand.

Fourth, the electronic ballast is of relatively low weight, for example is approximately 10% of the weight of a conventional inductive ballast. The ballast also has a high power factor and thus a low heat dissipation.

Fifth, the tube may be dimmed, at least to a level above 100 volts which is required for maintaining the arc across the tube, by decreasing the mains voltage. The light output of the tube may be decreased by approximately up to 50%, depending on the type of tube.

Sixth, the tube does not flicker and does not exhibit stroboscopic effects.

Seventh, the high frequency is shielded from the mains line, with suppressed radio interference and harmonic feedback to the mains supply.

Finally, the same ballast can be used with any number of tubes 20, i.e. from one to four tubes, and can be used with tubes of different wattages. In other words the ballast is not limited to a particular size or number of tubes, since the oscillator frequency is load dependent and simply varies frequency in accordance with number and types of tubes being supplied.

It is to be understood that the invention is not limited to precise details shown in the drawings and described above and many modifications may be made, as well as other embodiments will become apparent, without departing from the spirit or scope of the invention. For example the starter circuit 16 may be used with other ballast circuits. Also,

15

while not advised, starter circuits other than a tube striking dependant circuit 16 may be used with the inverter circuit 18 the frequency of which is load dependant.

CLAIMS:

1. A method of operating a gas discharge lamp including the steps of supplying a high frequency alternating current to the lamp in series with an inductance means from an inverter, the lamp and inductance means forming a load; characterized by sensing the current through the load, and varying the supply frequency (18) in accordance with the sensed current to maintain a substantially constant current through the load.

2. A method as claimed in claim 1, characterised by the further steps of decreasing the voltage of the supply to the inverter which in turn decreases the voltage supplied to the load; and maintaining the current through the load substantially constant by increasing the frequency of the supply from the inverter as the impedance of the load increases.

3. A power supply for a gas discharge lamp comprising an inverter for driving the lamp at a frequency sufficiently high for it to operate in a linear resistance mode characterised in that the inverter (18) is of a variable frequency type comprising two switch means (F1, F2) for switching a drive output between voltages of opposite polarity and having a switching transformer (T2,T3,T4) controlling the switch means (F1,F2); and impedance means (L1) connectable in series with a lamp (20) to form a load, (L1,20) the switching transformer being connectable to the load (L1,20) to provide positive current feedback to the inverter to control its frequency to maintain a substantially constant current through the load.

4. A power supply as claimed in claim 3, characterised in that the switching transformer winding (T4) is in series with the load.

5. A power supply as claimed in claim 3, characterised in

2

that the switching transformer winding (T4) is in parallel
with the load. (Fig.4)

6.  A power supply as claimed in any of claims 3 to 5, for
use with a plurality of lamps, characterised in that an
impedance means is provided for connection in series to each
lamp to form a load, with the loads being in parallel with
one another (Fig.3).

7.  A power supply as claimed in any of claims 3 to 6,
characterised in that the inverter (18) is of the push-pull
type.

8.  A power supply as claimed in any of claims 3 to 7,
characterised in that each switch means is a field effect
transistor.

9.  A power supply as claimed in any of claims 3 to 9,
characterised in that a voltage limiting means (28) is
connected across each switch means (F1 and F2) to provide a
current path parallel to the switch means if a predetermined
voltage across the switch means is exceeded.

10.  A power supply as claimed in any of claims 3 to 9,
characterised in that a current limiting means (30) is
provided to control the current applied to each switch
means, the current limiting means comprising means (32) to
sense the current passing through the switch means and
control switch means (36) responsive to the sensing means
(32) to control the switch means (F1,F2).

11.  A power supply as claimed in any of claims 3 to 10,
characterised in that filter means (40) is provided on the
input power supply (12) to the inverter 18.

12.  A power supply as claimed in any of claims 3 to 11,

3

including a radio interference supression capacitor (C5) in parallel with the inverter.

13. A power supply as claimed in any of claims 3 to 12, characterised in that a starting circuit means (16) is provided to produce a striking or starting potential across a lamp (20) connected to the inverter (18) the starting circuit comprising a capacitor (C1) in parallel with the inverter (18) and current limiting means (R1) to control the supply of current to the capacitor (C1) and the inverter (18) whereby a starting potential is achieved only after a predetermined time interval sufficient to allow the lamp elements (21) to be heated.

14. A power supply as claimed in claim 13, characterised in that by- pass means (24) is provided to by-pass the current limiting means (R1) for normal operation of the lamp (20), activating means (T1,T4) being provided to activate the by-pass means at an appropriate stage.

15. A power supply as claimed in claim 14, characterised in that the activating means (T1,T4) comprises means to sense striking of the lamp (T4).

16. A method of starting a gas discharge lamp including the steps of restricting the current supply to the lamp during starting thereof and subsequently increasing the current supply to the lamp, characterised by including the further steps of sensing the current through the lamp and increasing the current supply only when the lamp current increases on starting thereof.

17. A method as claimed in claim 16, characterised by including the further steps of connecting the elements (21) of the lamp (20) in series with each other and a capacitor (C3), supplying an alternating voltage to the lamp from an

4

inverter (18), increasing the frequency of the alternating voltage after a predetermined period to allow an increasing current to flow through the elements to heat them, (R4,C4,DC1) and after a further predetermined time delay applying a potential (C1) across the lamp to cause it to start.

18.    An electronic ballast for a gas discharge lamp including current limiting means (R1) for limiting the current delivered to a discharge lamp during starting thereof and means (24) for by-passing the current limiting means to allow adequate current to the lamp during normal running thereof, characterised ; by    means (T1,T4) responsive to the striking of the discharge lamp for activating the by-passing means (24).

19.    An electronic ballast as claimed in claim 18, the ballast including an inverter (18) for supplying an alternating current to the lamp, characterised in that means (R4,C4,DC1) is provided for initiating the inverter after a predetermined time delay from switch on of the ballast.

20.    A ballast as claimed in claim 19, characterised in that the inverter (18) operates at a frequency which is load dependant, the frequency increasing with increasing load during starting of the lamp (T2, T3, T4).

21.    An electronic ballast as claimed in any of claims 18 to 20, characterised in that it includes charging means (C1) which receives a charging current via said current limiting means (R1) for applying a starting potential across the lamp after a predetermined time interval (R1, C1).

22.    An electronic ballast as claimed in claim 19, characterised in that the inverter (18) comprises two switch means (26) for switching a drive output between voltages of

5

opposite polarity and having a switching transformer (T1, T2, T3, T4)/ controlling the switch means, the switching transformer having a first transformer winding (T4) in series with the discharge lamp and a second transformer winding (T1) coupled to said first transformer winding (T4) and arranged to activate said by-passing means (24) in response to a predetermined current flowing through said first transformer winding (T4) upon starting of the discharge lamp (20).

23.    An electronic ballast as claimed in claim 22, in which the first (T4) and second (T1) transformer windings are also coupled to transformer windings (T2, T3) controlling the frequency of the inverter (18) whereby the frequency of the inverter is increased immediately on striking of the lamp.

0126556

FIG. 1

FIG. 2

FIG. 4

FIG. 3

**European Patent Office**

## EUROPEAN SEARCH REPORT

Application number

EP 84 30 2798

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 060 751 (GENERAL ELECTRIC) <br> * Figures 1,2; column 4, lines 26-36 * | 1,2,5, 11 | H 05 B 41/29 |
| Y | | 16,20, 21,23 | |
| D,Y | EP-A-0 056 642 (WOLLANK) <br> * Abstract; figures 1,4 * | 3,6,19 | |
| Y | PT/ELEKTROTECHNIEK ELECTRONICA, vol. 38, no. 4, April 1983, pages 38-39, Rijswijk, NL; "Installatie en verlichtingstechniek" <br> * Whole article * | 3,4,7, 8,17 | |
| Y | GB-A-2 102 641 (LEE ELECTRIC) <br> * Figure 1b; column 2, lines 100-111 * | 7-9,10 | TECHNICAL FIELDS SEARCHED (Int. Cl. ³) <br><br> H 05 B 41/00 |
| Y | US-A-4 188 661 (BOWER) <br> * Column 2, lines 38-48 * | 11,12 | |
| Y,D | NL-A-7 600 156 (SIEMENS) <br><br> * Page 3, line 25 - page 6, line 10 * | 12-15, 18 | |
| | ---     -/- | | |

The present search report has been drawn up for all claims

| Place of search | Date of completion of the search | Examiner |
|---|---|---|
| THE HAGUE | 23-07-1984 | BERTIN M.H.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

# EUROPEAN SEARCH REPORT

**European Patent Office**

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. ³) |
|---|---|---|---|
| Y,D | WO-A-8 103 102 (SIEMENS)<br>* Claim 1 *<br>--- | 17 | |
| D,A | WO-A-8 300 587 (SIEMENS)<br>--- | | |
| D,A | US-A-3 328 721 (HEHENKAMP)<br>--- | | |
| D,A | US-A-4 042 852 (ZADEREJ)<br>--- | | |
| D,A | US-A-4 215 292 (TOSHIBA)<br>--- | | |
| D,A | US-A-4 277 726 (LITTON)<br>--- | | TECHNICAL FIELDS SEARCHED (Int. Cl. ³) |
| D,A | US-A-4 289 993 (HARPER)<br>--- | | |
| D,A | US-A-4 306 177 (KANEDA)<br>--- | | |
| D,A<br>P | US-A-4 392 087 (ZANSKY)<br>--- | | |
| D,A | US-A-4 042 856 (GENERAL ELECTRIC)<br>----- | | |

The present search report has been drawn up for all claims

| Place of search | Date of completion of the search | Examiner |
|---|---|---|
| THE HAGUE | 23-07-1984 | BERTIN M.H.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 02